# EUROPÄISCHE PATENTSCHRIFT

(11) **EP 1 183 480 B1**
(45) Veröffentlichungstag und Bekanntmachung des Hinweises auf die Patenterteilung: **16.03.2005**
(21) Anmeldenummer: 00936849.9
(22) Anmeldetag: 31.05.2000
(51) Int. Cl.: F16L 37/092

(54) **STECKKUPPLUNG**
PLUG-IN COUPLING
RACCORD A EMMANCHER

(30) Priorität: 04.06.1999 DE 19925640; 07.06.1999 DE 19925716; 16.07.1999 DE 19932718; 27.07.1999 DE 19935246; 08.12.1999 DE 19959067
(43) Veröffentlichungstag der Anmeldung: 06.03.2002
(73) Patentinhaber: Friatec Aktiengesellschaft, 68229 Mannheim (DE)
(72) Erfinder: MÜNSTER, Wilfried, D-69118 Heidelberg (DE); LUZ, Oliver, D-68163 Mannheim (DE); FRIEDRICH, Peter, D-68623 Lampertheim (DE)
(74) Vertreter: Schmitt, Meinrad, Dipl.-Ing.
(86) Internationale Anmeldenummer: PCT/EP2000/005027
(87) Internationale Veröffentlichungsnummer: WO 2000/075554

(56) Entgegenhaltungen:
- EP-A- 0 474 335
- EP-A- 0 587 131
- DE-A- 3 518 788
- FR-A- 2 409 445
- GB-A- 1 007 245
- US-A- 2 702 202
- US-A- 3 064 983
- US-A- 4 606 559

## Beschreibung

Die Erfindung bezieht sich auf eine Steckkupplung gemäß den im Oberbegriff des Patentanspruchs 1 angegebenen Merkmalen.

Aus der DE-A-196 54 435 ist eine derartige Steckkupplung mit einem Grundkörper und einem mit diesem unter Bildung eines axialen Ringspaltes verbindbaren Ringkörper bekannt. In den Ringspalt ist ein Rohrende einschiebbar, welches mittels eines im Ringspalt angeordneten Klemmringes festspannbar ist. Der Klemmring ist einteilig oder mehrteilig ausgebildet, wobei ein radial außen angeordneter Klemmringteil an der Außenfläche des eingeschobenen Rohrendes unter Vorspannung anliegt. Ein radial innenliegender Klemmringteil ist in einer Ringnut des Grundkörpers angeordnet und liegt unter Vorspannung an der Innenfläche des eingeschobenen Rohrendes an. Der Grundkörper enthält zwei weitere Ringnuten zur Aufnahme von zwei an der Innenfläche des eingeschobenen Rohrendes dichtend anliegenden Dichtringen. Aufgrund der drei Ringnuten weist der Grundkörper eine nicht unerhebliche radiale Dicke auf. Wegen des im Bereich der Stirnfläche des eingeschobenen Rohrendes angeordneten äußeren Klemmringteiles ist die Anordnung eines Sichtfenster zur optischen Kontrolle dahingehend, ob das Rohrende vollständig eingeschoben ist, nicht ohne weiteres mögalich.

Ferner ist aus der DE-A-195 24 934 eine Steckkupplung mit zwei an der Außenfläche des Rohrendes dichtend anliegenden Dichtringen bekannt. Axial zwischen diesen beiden Dichtringen ist ein Leckagepfad mit einer Durchgangsöffnung des Ringkörpers vorgesehen. Die Durchgangsöffnung ist in einem erheblichen Abstand zur axialen Stirnfläche des Rohrendes angeordnet, wodurch eine optische Sichtkontrolle hinsichtlich des vollständig eingeschobenen Rohrendes nicht möglich ist.

Weiterhin ist aus der DE-A-35 18 788 eine Steckkupplung mit einem Stutzen zur Aufnahme eines Leitungs- bzw. Rohrendes bekannt. Es ist ein an der Außenfläche des Rohrendes anliegende Dichtring vorgesehen, doch ist ein Grundkörper zur Abstützung oder Abdichtung der Innenfläche des Rohrendes nicht vorhanden. Der Stutzen der Steckkupplung besteht wenigstens im Bereich des Grundes der für das Rohrende vorgesehenen Ausnehmung aus einem transparenten Werkstoff zur optischen Kontrolle über die bis zum Anschlag erfolgte Einstecktiefe. Ein Hinweis auf die Ausbildung einer Steckkupplung mit Ringkörper und Grundkörper, wobei zwischen diesen ein Ringspalt zur Aufnahme des Rohrendes vorgesehen ist, wird hierdurch dem Fachmann nicht vermittelt, zumal bei einer solchen Steckkupplung im Bereich des eingeschobenen Stirnendes ein Klemmring mit einem äußeren Klemmringteil vorhanden ist, welcher die Sicht verdecken würde.

Schließlich ist aus der EP-A-587 131 eine Steckkupplung bekannt, welche als Doppelmuffe ausgebildet ist und einen Grundkörper sowie eine Halteeinrichtung oder Klemmvorrichtung jeweils für die in den Muffenkörper einsteckbaren Enden der miteinander zu verbindenden Rohre enthält. Die Halteeinrichtung enthält einen Klemmring, welcher außen einen Klemmkonus und innen zumindest eine Klemmrippe aufweist, welche mit dem jeweiligen Rohrende in Eingriff bringbar ist. Mittels einer auf den Muffenkörper aufschraubbaren Überwurfmutter ist ein Gegenkonus mit dem Klemmring verspannbar. Ferner ist an der Innenseite des Muffenkörpers ein an der Außenfläche des eingeschobenen Rohrendes dichtend anliegender Dichtring vorgesehen. Das Rohrende muß eine hinreichende Steifigkeit aufweisen, damit aufgrund der radialen Klemmkraftkomponenten das Rohrende nicht nach innen ausweicht, wodurch die axiale Festlegung des Rohrendes in der Steckkupplung in Frage gestellt wäre. Bei der Herstellung der Verbindung ist darauf zu achten, daß das Rohrende weit genug in den Muffenkörper eingeführt wird, damit der Klemmring und ebenso der Dichtring ihre Funktionen erfüllen können. Bei einem unvollständigen Einschieben des Rohrendes in die Steckkupplung besteht die Gefahr, daß die Verbindung nicht oder nur fehlerhaft hergestellt wird. Ferner besteht vor allem bei Druckleitungen das Problem, daß infolge von Relativbewegungen des Rohrendes bezüglich der Steckkupplung das Rohrende aus der Steckkupplung teilweise derart heraus bewegt werden kann, daß die geforderte Dichtigkeit und / oder axiale Festlegung nicht mehr gewährleistet werden kann.

Hiervon ausgehend liegt der Erfindung die Aufgabe zugrunde, die Steckkupplung der genannten Art dahingehend weiterzubilden, daß mit geringem Aufwand und hoher Funktionssicherheit die Verbindung mit wenigstens einem Rohrende durchführbar ist. Die Steckkupplung soll bei der Montage eine funktionsgerechte Handhabung ermöglichen und die Gefahr von Montagefehlern soll ausgeschlossen werden. Die Steckkupplung soll für Rohre aus unterschiedlichen Werkstoffen, wie Kunststoff oder Metall oder einem Verbund derselben (Verbundrohre aus Kunststoff mit einer Metall-Zwischenschicht), gleichermaßen einsetzbar sein, wobei selbst bei vergleichsweise weichen Werkstoffen, wie insbesondere Polyäthylen, dauerhaft und über viele Jahre eine sichere Verbindung gewährleistet werden soll. Ferner soll die Steckkupplung vor allem im Sanitärbereich, insbesondere für die Warmwasser- und Kaltwasserinstallation zum Einsatz gelangen können, wobei vor allem durch Temperaturänderungen des strömenden Mediums bedingte Materialveränderungen, insbesondere hinsichtlich der Dimension oder der Steifigkeit, zuverlässig von der Steckkupplung aufgenommen werden sollen.

Die Lösung dieser Aufgabe erfolgt gemäß den im Patentanspruch 1 angegebenen Merkmalen.

Die erfindungsgemäße Steckkupplung zeichnet sich durch eine funktionssichere Konstruktion und einen geringen Fertigungs- und Montageaufwand aus. Der teilweise in das Innere des Rohrendes eingreifende Grundkörper gewährleistet eine sichere radiale Abstützung des Rohrendes, so daß auch unter wechselnden Betriebsbedingungen eine sichere Aufnahme und Übertragung der Klemmkräfte der Haltemittel sichergestellt ist. Mit dem Grundkörper ist ein Ringkörper oder eine Haube gekoppelt, welche das Rohrende radial außen umgibt, wobei das Rohrende in einem Ringraum zwischen dem Grundkörper und der Haube festgeklemmt ist. Der Ringkörper oder die Haube enthalten eine bevorzugt konische Innenfläche, wobei zwischen dieser und der Außenfläche des Rohrendes der Klemmring angeordnet ist, welcher kraft- und / oder formschlüssig beidseitig sowohl mit der Innenfläche des Ringkörpers als auch mit der Außenfläche des Rohrendes gekoppelt ist. Das Dichtelement ist in bevorzugter Weise an dem in das Rohrende eingreifenden Teil des Grundkörpers angeordnet, wobei der Dichtring an der innenfläche des Rohrendes dichtend anliegt. Der Klemm.. oder Haltering weist sowohl radial innen als auch radial außen jeweils wenigstens eine Haltekralle auf, welche in die Außenfläche des Rohrendes bzw. in die Innenfläche des Ringkörpers eingepreßt wird.

In einer besonderen Ausgestaltung der Erfindung enthält der Klemmring wenigstens ein zusätzliches angeformtes Spannelement, mittels welchem im montierten Zustand eine Vorspannung auf das Rohr erzeugt wird. Hierdurch wird eine verbesserte und / oder schnellere Verkrallung des Rohres gewährleistet. Die Haube enthält wenigstens eine dem Klemmring und / oder dem Spannelement zugeordnete Nocke und / oder einen Ringbund zum Abstützen des Spannelements bzw. des Klemmrings. Das Spannelement liegt an dem Ringbund derart an, daß der Klemmring in bevorzugter Weise unter axialer Vorspannung an der korrespondierenden Klemmfläche der Haube anliegt. Beim Einschieben des Rohrendes in die Steckkupplung kann der Klemmring entgegen der Vorspannkraft des Spannelements bevorzugt in axialer Richtung ausweichen, wobei der Einschubwiderstand praktisch unverändert bleibt. Nach dem vollständigen Einschieben des Rohrendes wird der Klemmring mittels der Spannelemente an die insbesondere konische Klemmfläche der Haube bzw. des Ringkörpers gedrückt mit der Folge, daß das Rohrende schnell und funktionssicher in der Steckkupplung fixiert ist. Fertigungstoleranzen der Steckkupplung, insbesondere des Ringkörpers und des Klemmringes, werden somit ebenso sicher ausgeglichen, wie Fertigungstoleranzen des Rohrendes und insbesondere dessen Außendurchmessers. Es muß nicht mehr befürchtet werden, daß der in die Haube montierte Klemmring radial schon derart weit verspannt ist, daß das Rohrende nur bei Überwindung eines großen Einschubwiderstandes in die Steckkupplung einschiebbar ist. Zweckmäßig sind mehrere, bevorzugt drei, derartige federnde Spannelemente vorgesehen, welche an der einen axialen Stirnfläche des Klemmringes über insbesondere im wesentlichen axial gerichtete kurze Stege mit dem Klemmring verbunden sind und mit diesem eine integrale Einheit bilden. Die Haube bzw. der Ringkörper enthalten in bevorzugter Weise radial nach innen gerichtete Nocken, welche mit dem Spannelement in Eingriff bringbar sind, zum Erzeugen der radialen Vorspannung und dem funktionssicheren Einkrallen und Verspannen mit dem in die Steckkupplung eingeschobenen Rohrende.

Erfindungsgemäß enthält die Haube bzw. der Ringkörper wenigstens ein Sichtfenster, welches insbesondere als eine radiale Durchbrechung oder Öffnung oder als ein zumindest teilweise transparenter Bereich derart ausgebildet ist,- daß jederzeit eine Sichtkontrolle durchführbar ist, ob das Rohrende ordnungsgemäß, insbesondere bis zu einem vorgegebenen Anschlag, in die Steckkupplung eingeschoben ist. Diese optische Kontrolle ist sowohl bei der Montage, als auch im Nachhinein selbst nach langer Betriebsdauer in einfacher Weise durchführbar, so daß man jederzeit eine sich gegebenenfalls anbahnende Lösung der Verbindung feststellen und in geeigneter Weise Abhilfe schaffen kann. Die Haube ist in bevorzugter Weise komplett aus transparentem Material gefertigt, wobei aufgrund der einteiligen Ausbildung Fertigungsprobleme vermieden werden. Ferner kann die Haube zur Sichtkontrolle wenigstens ein transparentes Sichtfenster aufweisen. Hierbei besteht die Haube insgesamt zweckmäßig aus einem transparenten Werkstoff, welcher außerhalb des oder der Sichtfenster eingefärbt oder mit einer zweckmäßig an der Innenseite der Haube angeordneten Farbschicht versehen ist. Zusätzlich oder alternativ kann im Rahmen der Erfindung die Haube wenigstens eine radial durchgehende Öffnung oder Durchbrechung derart aufweisen, daß das vollständig und ordnungsmäßig in den Steckverbinder eingeschobene Rohrende von außen jederzeit erkennbar ist. Bei fehlerhafter Montage befindet sich der Bereich der Stirnfläche des Rohrendes nicht radial innen im Bereich des Sichtfensters bzw. der genannten Öffnung, so daß die fehlerhafte Verbindung ohne weiteres erkennbar ist.

Des weiteren enthalten der Dichtring und der Grundkörper miteinander korrespondierende und ineinander eingreifende und / oder aneinander liegende Halteelemente, Ringnuten oder dergleichen zur axialen Festlegung des Dichtringes auf dem Grundkörper. Hierdurch wird sicher gestellt, daß beim Einschieben des Rohrendes in die Steckkupplung der Dichtring seine vorgegebene Position beibehält und ein unzulässiges Einschieben des Dichtringes in die Steckkupplung oder Beschädigungen des Dichtringes vermieden werden. Der Dichtring enthält einen ersten und einen zweiten Dichtwulst bzw. Dichtlippen welche an der Innenfläche des zugeordneten Rohrendes zur Anlage bringbar sind, wobei auch der Grundkörper innerhalb des Rohrendes angeordnet wird. Des weiteren kann im Rahmen der Erfindung der Dichtring auch derart angeordnet bzw. ausgebildet sein, daß er an der Außenfläche des Rohrendes zur Anlage bringbar ist, wobei der Grundkörper das Rohrende nach Art einer Muffe radial außen umgibt. Mittels geeigneter Kopplungselemente, wie Klemmringe oder Spannringe, welche insbesondere Haltekrallen aufweisen, erfolgt eine kraft- und / oder formschlüssige Fixierung des Rohrendes mit der Steckkupplung. Erfindungsgemäß ist der Dichtring in einer in der Außenfläche des Grundkörpers vorgesehenen Ringnut angeordnet. Zwischen der Ringnut und dem freien Ende des Grundkörpers enthält dieser einen Ring, mittels welchem der Dichtring beim Einschieben des Rohrendes vor einem unerwünschten Ausheben oder Verschieben gesichert ist. Der Ring bildet einen funktionssicheren Aushebeschutz für den Dichtring, welcher beim weiteren Einschieben des Rohrendes dichtend an dessen Innenfläche zur Anlage gelangt. Der Dichtring ist flach ausgebildet, weist also eine wesentlich geringere radiale Dicke als axiale Länge auf. Die radiale Wanddicke des innerhalb des Rohrendes zusammen mit dem genannten Dichtring liegenden Teils des Grundkörpers kann somit vergleichsweise klein vorgegeben werden, wodurch letztendlich ein optimierter Innendurchmesser des Grundkörpers gewährleistet ist und die Querschnittsverengung auf ein Minimum reduziert ist.

Es sei festgehalten, daß die erfindungsgemäße Steckkupplung Bestandteil eines Fittings zur Verbindung von zwei oder mehreren Rohren, beispielsweise in Form eines Winkels, einer Wandscheibe oder eines T-Stückes, ebenso sein kann, wie Bestandteil des Gehäuses einer Armatur, eines Übergangsstückes zwischen Rohren aus unterschiedlichen Werkstoffen, oder dergleichen. Bei Ausbildung als Fitting oder Doppelmuffe zum Verbinden von zwei oder mehr Rohren, können deren Achsen beliebige Winkelstellungen zueinander aufweisen. Auch sei ausdrücklich darauf hingewiesen, daß die Steckkupplung insbesondere für Rohre aus unterschiedlichen Werkstoffen und / oder mit unterschiedlichen Materialeigenschaften zum Einsatz gelangen kann.

Besondere Ausgestaltungen und Weiterbildungen der Erfindung sind in den Unteransprüchen sowie der weiteren Beschreibung angegeben.

Die Erfindung wird nachfolgend anhand besonderer, in der Zeichnung dargestellter Ausführungsbeispiele näher erläutert, ohne daß insoweit eine Beschränkung erfolgt. Es zeigen:
- Fig. 1: einen Längsschnitt durch die Steckkupplung zur Verbindung von zwei Rohrenden,
- Fig. 2: vergrößert das Detail A gemäß Fig. 1,
- Fig. 3: einen Längsschnitt durch eine weitere besondere Ausführungsform der Steckkupplung,
- Fig. 4: einen Längsschnitt durch den Ringkörper und den Klemmring einer Ausführungsform ähnlich Fig. 3,
- Fig. 5: einen Schnitt durch ein weiteres Ausführungsbeispiel des Grundkörpers,
- Fig. 6: vergrößert das Detail VI gemäß Fig. 5,
- Fig. 7: eine Ansicht einer als T-Stück ausgebildeten Steckkupplung,
- Fig. 8: einen Schnitt durch einen Teil der Steckkupplung zusammen mit dem eingeschobenen Rohrende,
- Fig. 9, 10: Längsschnitte eines weiteren besonderen Ausführungsbeispiels der Steckkupplung,
- Fig. 11: vergrößert den Klemmring gemäß Fig. 9,
- Fig. 12: eine perspektivische Darstellung des Klemmrings,
- Fig. 13: vergrößert den Dichtring gemäß Fig. 9.

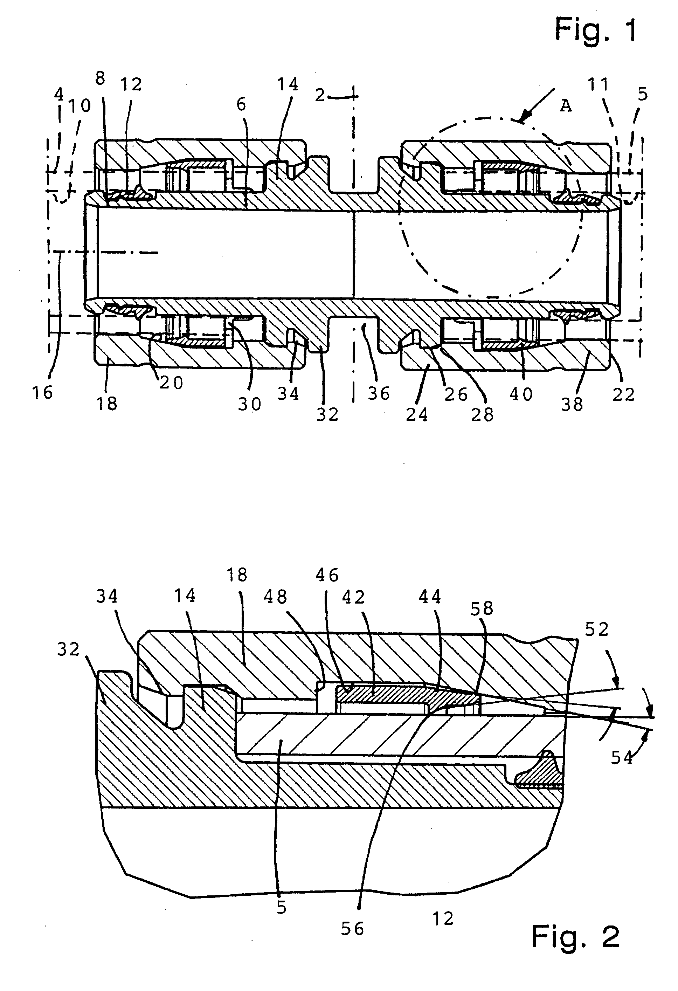

Die Steckkupplung gemäß Fig. 1 ist als Doppelmuffe und symmetrisch zur Mittelebene 2 ausgebildet und dient zur Verbindung von zwei Rohrenden 4, 5. Die nachfolgenden Erläuterungen gelten in entsprechender Weise jeweils für die beiden zueinander symmetrischen Teile der Steckkupplung. Diese enthält einen Grundkörper 6, welcher teilweise jeweils in die beiden Rohrenden 4, 5 eingeschoben ist, wobei die inneren Endbereiche 8 des Grundkörpers 6 bevorzugt als konische Erweiterungen, radial nach außen in Richtung auf die Innenflächen 10, 11 des jeweiligen Rohrendes 4, 5, ausgebildet sind. Des weiteren liegt bevorzugt jeweils an der Innenfläche 10, 11 ein Dichtring 12 dichtend an, welcher insbesondere in einer Ringnut der Außenfläche des Grundkörpers 6 angeordnet ist. Der Grundkörper 6 enthält ferner einen ersten radial nach außen gerichteten Steg 14 als Anschlag für die Stirnfläche des in die Steckkupplung eingeschobenen Rohrendes 4 bzw. 5. Der Steg 14 ist bevorzugt als ein, bezogen auf die Längsachse 16, umlaufender geschlossener Ring ausgebildet, doch kann er gleichermaßen in eine Anzahl von Segmenten unterteilt sein.

Ferner ist eine Haube oder ein Ringkörper 18 vorgesehen, welcher das jeweilige Rohrende 4, 5 außen umgibt. Der Ringkörper 18 enthält innen eine bevorzugt konisch ausgebildete Klemmfläche 20, deren Innendurchmesser, in Richtung weg vom Grundkörper bzw. zum freien Ende 22 des jeweiligen Ringkörpers 18 abnimmt. Die Haube bzw. der Ringkörper 18 enthält ferner ein Verbindungselement 24, welches mit dem ersten Steg 14 in Eingriff steht. Der Steg 14 besitzt somit eine Doppelfunktion, nämlich Anschlag für das Rohrende und Befestigung des Ringkörpers 18. In zweckmäßiger Weise enthält das Verbindungselement 24 eine Ringnut 26, in welche der erste Steg 14 mit seinem radial außenliegenden Rand 28 eingreift. Der Ringkörper 18, insbesondere dessen Verbindungselement 24, übergreift in axialer Richtung weg vom freien Ende des Grundkörpers 6 die Stirnfläche des eingeschobenen Rohrendes und ferner insbesondere ringförmig den Außenrand des ersten Steges 14 und kann darüber hinaus in bevorzugter Weise in eine Anzahl von Segmenten unterteilt sein. Zumindest das Verbindungselement 24 ist derart federelastisch deformierbar, daß es zur Montage über den Außenrand des ersten Steges 14 hinweggeschoben werden kann, um die in der Zeichnung dargestellte arretierte Position bezüglich des Grundkörpers 6 einzunehmen. In besonders vorteilhafter Weise erfolgt die Montage bzw. Herstellung der Verbindung des Ringkörpers 18 mit dem Grundkörper 6 werkseitig, so daß vor dem Einschieben des Rohrendes zwischen dem innenliegenden Grundkörper 6 und dem außenliegenden Ringkörper 18 ein Ringspalt 27 vorhanden ist, in welchen beim Herstellen der Verbindung des Steckverbinders mit dem Rohrende 4, 5 dieses axial einschiebbar ist.

In der dargestellten Ausführungsform ist der Ringkörper 18 mittels der Verbindungselemente 24 dauerhaft und nicht lösbar mit dem Grundkörper 6 verbunden. Alternativ kann im Rahmen der Erfindung die Verbindung auch lösbar ausgebildet sein, wobei die Verbindungselemente insbesondere jeweils ein Innengewinde aufweisen, welches mit einem korrespondierenden Außengewinde des Grundkörpers in Eingriff ist. Des weiteren können im Rahmen der Erfindung auch andere Verbindungen, wie beispielsweise nach Art eines Bajonettverschlusses, vorgesehen sein.

Der Ringkörper 18 enthält zumindest im Bereich des Steges 14 bzw. des Anschlags für das Rohrende ein Sichtfenster 30 und / oder ist transparent ausgebildet, daß die radial innenliegende Stirnfläche bzw. der daran anschließende Teil des Rohrendes 4, 5 von außen sichtbar ist. Somit ist eine optische Sichtkontrolle geschaffen, so daß ein unvollständiges Einschieben des Rohrendes bei der Montage oder später gegebenenfalls ein teilweises Herauslösen des Rohrendes ohne weiteres erkannt werden kann. In vorteilhafter Weise ist über den Umfang des Ringkörpers 18 verteilt eine Anzahl derartiger Sichtfenster, insbesondere in Form von radialen Durchbrechungen oder Öffnungen, vorgesehen, so daß die optische Kontrolle praktisch von jeder Seite her problemlos durchführbar ist. In einer alternativen Ausgestaltung ist der komplette Ringkörper 18 aus transparentem Material, und zwar insbesondere aus Kunststoff, gefertigt. Das Sichtfenster 30 ist erfindungsgemäß außerhalb des mittels des Dichtringes abgedichteten Innenbereichs der Steckkupplung vorgesehen. Axial an das oder die Sichtfenster 30 anschließend, und zwar weg vom freien Ende des Grundkörpers 6, sind erfindungsgemäß das oder die Verbindungselemente 24 des Ringkörpers 18 mit dem Grundkörper 6 vorgesehen. Der Grundkörper besitzt ferner einen zweiten Steg 32, axial beabstandet vom ersten Steg 14 derart, daß der Ringkörper 18 mit einem hakenförmigen, radial nach innen gerichteten Ansatz 34 in den Ringraum 35 zwischen den genannten Stegen 14, 32 zur Arretierung des Ringkörpers 18 auf dem Grundkörper 6 eingreift. Der zweite radiale Steg 32 dient als Aufschubbegrenzung für den Ringkörper 18 bei der Montage auf den Grundkörper 6. Bei der hier gezeigten Ausführungsform als Doppelmuffe ist zwischen den axial beabstandeten zweiten Stegen 32 eine Ringnut 36 des Grundkörpers 6 vorhanden. Die Ringnut 36 kann als Angreifmittel, beispielsweise als Sechskant, für ein Werkzeug beim Herstellen der Verbindung mit dem Ringkörper 18 bzw. dem Rohrende 4, 5 genutzt werden.

Wie aus der Zeichnung ersichtlich, enthält der Ringkörper 18 am freien Ende 22 einen Bereich 38, dessen axiale Länge vorgegeben ist und innerhalb desselben der Dichtring 12 angeordnet ist. Mit diesem Bereich 38 liegt der Ringkörper 18 zumindest näherungsweise an der Außenfläche des jeweiligen eingeschobenen Rohrendes 4, 5 an. Die Innenfläche des Ringkörpers 18 ist in diesem Bereich 37 bevorzugt zylindrisch ausgebildet und gewährleistet somit eine sichere radiale Abstützung des Rohrendes und folglich eine sichere Abdichtung mittels des radial innen liegenden Dichtringes 12.

Wie aus der vergrößerten Detaildarstellung gemäß Fig. 2 ersichtlich, ist radial zwischen dem Ringkörper 18 und dem Rohrende 5, ein Klemmring 40 angeordnet. Der Klemmring 40 enthält in besonders zweckmäßiger Weise einen ersten Teil 42 und einen zweiten ringförmigen Teil 44. Der erste, zylindrische Teil 42 liegt dem ersten Steg 14 benachbart und weist in vorteilhafter Weise eine zylindrische Innenfläche und / oder zylindrische Außenfläche auf. Im Bereich des ersten Teils 42 ist die Innenfläche 46 des Ringkörpers 18 vorteilhaft gleichfalls im wesentlichen zylindrisch ausgebildet. Des weiteren enthält der Ringkörper 18 einen Ringbund 48, welchem teilweise gegenüberliegend eine axiale Stirnfläche des Klemmringes 40 bzw. dessen ersten Teils 42 vorgesehen ist.

Der zweite Teil 44 ist erfindungsgemäß keilförmig ausgebildet mit in Richtung zum freien Ende der Steckkupplung verjüngender Dicke. Wie bereits erläutert, ist die Klemmfläche 20 des Ringkörpers 18 bevorzugt konisch verjüngt ausgebildet. Der zweite Teil 44 besitzt eine gleichfalls bevorzugt konische Außenfläche zur Anlage an der genannten Klemmfläche 20. Die Außenfläche des zweiten Klemmring-Teiles 44 und dessen Innenfläche schneiden sich unter einem ersten Öffnungswinkel 52. Die Klemmfläche 20 schneidet hingegen die Außenfläche des eingeschobenen Rohrendes 5 unter einem zweiten Öffnungswinkel 54. Der Klemmring 40 besitzt erfindungsgemäß radial innen eine Halte- oder Schneidkralle 56, welche insbesondere ringförmig ausgebildet ist und in die Außenfläche des Rohrendes 5 eingepreßt ist. In vorteilhafter Weise besitzt der Klemmring 40 ferner wenigstens eine radial außenliegende zweite Haltekralle 58, welche in die Klemmfläche 20 eingepreßt ist. Die bevorzugt ringförmige Haltekralle bzw. Haltekrallen 56, 58 gewährleisten aufgrund des im wesentlichen linienförmigen Eingreifens in die Außenfläche des Rohrendes 5 und / oder in die innere Klemmfläche des Ringkörpers 18 eine hohe Flächenpressung und letztendlich eine sichere Arretierung gegen axiale Auszugskräfte des Rohrendes 5 aus der Steckkupplung. Da der genannte erste Öffnungswinkel 52 erfindungsgemäß größer ist als der genannte zweite Öffnungswinkel 44, sind die genannten Haltekrallen 56, 58 besonders effektiv. Mit geringem Fertigungsaufwand sind die radial nach innen bzw. radial nach außen gerichteten Haltekrallen 56, 58 geschaffen, die eine hohe Flächenpressung sicher stellen.

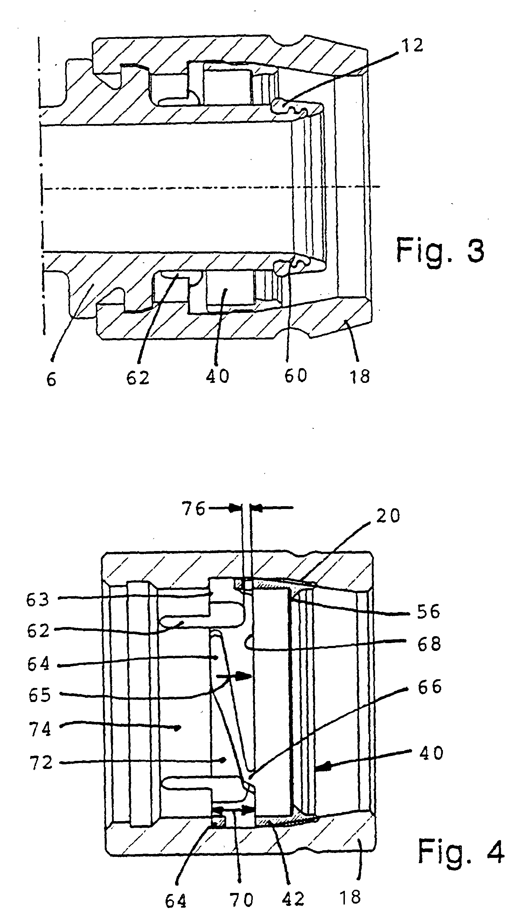

Fig. 3 zeigt eine besondere Ausführungsform der erfindungsgemäßen Steckkupplung, welche als Doppelmuffe ausgebildet sein kann, wobei hier nur die eine Hälfte dargestellt ist. Der an der Innenseite des einzuschiebenden Rohrendes zur Anlage bringbare Dichtring 12 ist im Bereich des freien Endes 60 des Grundkörpers 6 angeordnet. Der Ringkörper 18 enthält Nocken 62, welche mit einem nachfolgend zu erläuternden Spannelement des Klemmringes 40 zur Erzeugung einer schnellen und / oder zusätzlichen Vorspannung oder Verkrallung mit dem radial innenliegenden Rohrende gewährleisten. Im übrigen gelten die vorstehenden Erläuterungen der ersten Ausführungsform der Steckkupplung in entsprechender Weise.

Fig. 4 zeigt in einer axialen Ebene eine im Vergleich mit Fig. 3 etwas modifizierte Ausführungsform des Ringkörpers 18 und des Klemmringes 40. Der Ringkörper 18 enthält eine radial nach innen gerichtete Stufe oder einen Ringbund 63, an welchen die federnden Spannelemente 64 des Klemmrings 40 anliegen. Mittels der Spannelemente 64 wird somit der Klemmring 40 in Richtung des Pfeiles 65 gegen die Klemmfläche 20 des Ringkörpers 18 mit vorgegebener Vorspannung angedrückt. Fertigungstoleranzen werden somit in vorteilhafter Weise ausgeglichen. Die Vorspannung ist im Rahmen der Erfindung derart vorgegeben, daß das Rohrende praktisch ohne Erhöhung des Einschubwiderstandes in die Steckkupplung einsteckbar ist. Ohne die Spannelemente 64 müßten enge Fertigungstoleranzen für den Ringkörper und den Klemmring ebenso eingehalten werden wie für das einzuschiebende Rohrende, um einerseits einen zu hohen Einschubwiderstand für das Rohrende im Falle eines zu geringen Innendurchmessers der ersten inneren Haltekralle 56 zu vermeiden und um andererseits eine sichere Anlage und ein sofortiges Einkrallen der Haltekralle 56 in das eingeschobene Rohrende sicherzustellen. Das jeweilige Spannelement 64 ist mittels eines kurzen Steges 66 im Bereich der axialen Stirnfläche 68 mit dem Klemmring 40 einteilig verbunden. Wie ersichtlich, weist die axiale Stirnfläche 68 zum Ringbund 63 einen vorgegebenen Abstand 70 auf, wobei in dem somit vorgegebenen axialen Bereich 72 das oder die Spannelemente 64 angeordnet sind. Wie dargestellt, erstrecken sich die Nocken 62 sowohl in den axialen Bereich 72 als auch in den vom Klemmring abgewandten anschließenden Innenbereich 74 des Ringkörpers 18. Der genannte axiale Bereich 72 weist einen größeren Innendurchmesser auf als der über die Stufe bzw. den Ringbund 63 anschließende Innenbereich 74 des Ringkörpers 18. Ferner sei ausdrücklich festgehalten, daß die federnden Spannelemente 64 axial an der Seite des Klemmringes 40 angeordnet sind, welche Seite dem oben erläuterten ersten und zweiten Teil des Klemmringes 40 gegenüberliegt. Die Nocken 62 enden in vorteilhafter Weise in einem vorgegebenen axialen Abstand 76 vor der Stirnfläche 68, so daß eine sichere axiale Ausrichtung des Klemmringes 40 gewährleistet ist und ein Verkanten oder Schrägstellen des Klemmringes innerhalb des Ringkörpers 18 ausgeschlossen wird. Beim Einschieben eines Rohrendes kann der axiale Abstand 76 gegen Null gehen, wobei eine koaxiale Ausrichtung des Klemmringes 40 innerhalb des Ringkörpers 18 in bevorzugter Weise gewährleistet ist.

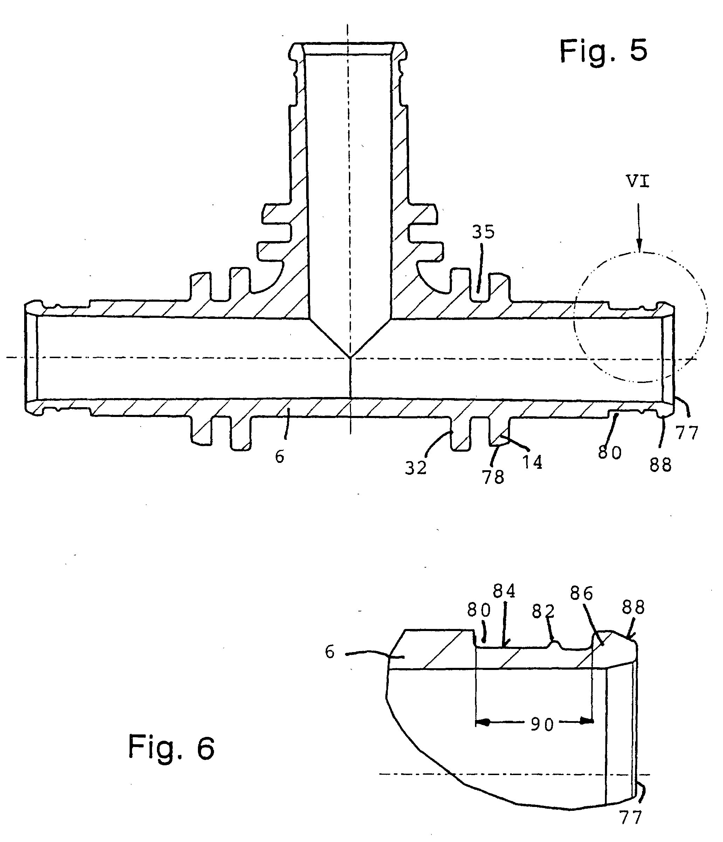

Fig. 5 zeigt einen Schnitt durch ein weiteres Ausführungsbeispiel des Grundkörpers 6, welcher als T-Fitting zur Verbindung von drei Rohren ausgebildet ist. Die dem jeweiligen Rohr zugeordneten Teile des Grundkörpers 6 sind übereinstimmend ausgebildet, so daß die weiteren Erläuterungen für alle drei Teile des Fittings übereinstimmend gelten. Der Grundkörper 6 enthält den außenliegenden Ringraum 35, welcher in zweckmäßiger Weise zwischen den beiden axial beabstandeten radialen Stegen oder Ringen 14, 32 angeordnet ist. Die Stege 14, 32 können als über den Umfang geschlossene Ringe oder auch als eine Anzahl von Segmenten ausgebildet sein, zwischen welchen in Umfangsrichtung vorgegebene Abstände vorhanden sind. Der Ringraum 35 ist zur Arretierung der hier nicht weiter dargestellten Haube vorgesehen, mittels welcher das mit dem Grundkörper 6 verbundene Rohrende verbindbar ist und welche im Bereich der Stege 14, 32 endet. Der dem freien Ende 77 des Grundkörpers 6 zugewandte Steg 14 weist in zweckmäßiger Weise einen geringeren Außendurchmesser auf als der vom freien Ende 77 axial weiter beabstandete andere Steg 32. Des weiteren ist die Außenfläche 78 des dem freien Ende 77 nächstliegenden Steges 14 in Richtung zum freien Ende 77 geneigt bzw. abgeflacht ausgebildet, damit Verbindungsmittel, Rastelemente oder dergleichen der genannten Haube problemlos über den Steg 14 hinweg geschoben werden können, um dann in die Ringnut 26 zur axialen Fixierung der Haube einzugreifen.

Fig. 6 zeigt vergrößert das Detail V gemäß Fig. 5. Der Fittingkörper 6 enthält eine erste Ringnut 80 für einen hier nicht dargestellten Dichtungsring. Ein radial nach außen gerichteter Profilring 82 ist im Boden 84 der Profilnut 80 vorgesehen. Dieser Profilring 82 des Grundkörpers 6 greift in eine korrespondierende Ringnut des flachen Dichtringes ein, so daß eine sichere Fixierung desselben auf dem Grundkörper 6 gewährleistet ist. Zwischen der Ringnut 80 und dem freien Ende 77 enthält der Grundkörper 6 einen radial nach außen gerichteten Ring 86, mittels welchem der Dichtring beim Einschieben des Rohrendes gegen ein Verschieben oder Ausheben gesichert ist. Der Ring 86 weist zum freien Ende 77 hin eine abgeschrägte, geneigte Außenfläche 88 auf, welche in besonders zweckmäßiger Weise als Einschiebehilfe dient und eine Zentrierung des Rohrendes bezüglich des Grundkörpers sicher stellt. Im Zusammenwirken mit dem erfindungsgemäß vorgesehenen Ring 86 und dem Profilring 82 wird ein unzulässiges Verschieben des flachen Dichtringes beim Einschieben des Rohrendes in die Steckkupplung mit hoher Funktionssicherheit unterbunden. Alternativ können im Rahmen der Erfindung aber auch noch weitere entsprechende Profiiringe vorgesehen sein. Der Boden 84 der Ringnut 80 weist in bevorzugter Weise eine vorgegebene axiale Erstreckung 90 auf und ist in vorteilhafter Weise als eine zur Längsachse 16 koaxiale, zylindrische Fläche ausgebildet. Die axiale Erstreckung 90 der Ringnut 80 ist in vorteilhafter Weise wesentlich größer als die radiale Tiefe.

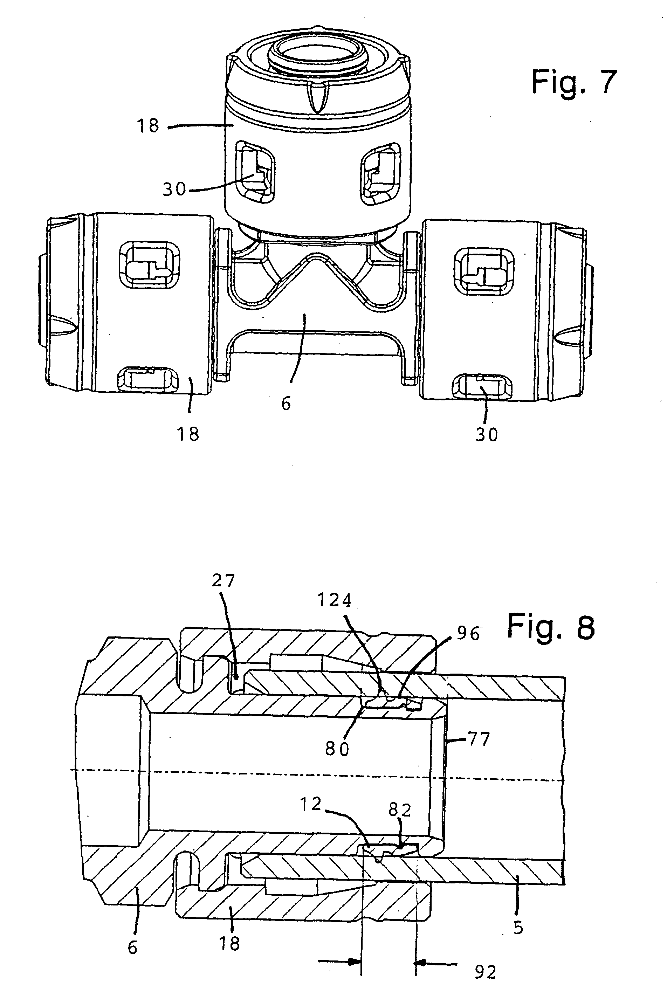

Fig. 7 zeigt eine Ansicht der als T-Stück ausgebildeten Steckkupplung mit dem Grundkörper 6 entsprechend Fig. 5. Wie ersichtlich, enthält die Steckkupplung drei Augen oder Ringkörper 18 auf dem jeweiligen Ende des Grundkörpers 6. Die Ringkörper 18 enthalten die bereits erwähnten Sichtfenster 30, und zwar jeweils vier über den Umfang gleichmäßig verteilt. Die Sichtfenster 30 sind als radiale Durchbrechungen oder Öffnungen ausgebildet und ermöglichen erfindungsgemäß eine optische Kontrolle der jeweiligen in den Ringspalt zwischen dem Ringkörper 18 und dem Grundkörper 6 eingeschobenen Rohrende.

In Fig. 8 ist in einem axialen Längsschnitt ein Teil der Steckkupplung dargestellt, wobei das Rohrende 5 in den sich axial erstreckenden Ringspalt 27 zwischen dem Grundkörper 6 und dem Ringkörper 18 eingeschoben ist. Der Dichtring 12 enthält einen radial nach außen gerichteten Dichtwulst 124, welcher der Einfachheit halber im nicht komprimierten Zustand dargestellt ist. Tatsächlich ist der an der Innenfläche des Rohrendes 5 dichtend anliegende Dichtwulst 124 derart deformiert und / oder komprimiert, daß er sich radial innen in der Ringnut 80 befindet. Der Dichtring 12 ist erfindungsgemäß als Flachdichtung ausgebildet und besitzt eine axiale Länge 92, welche um einen vorgegebenen Faktor größer ist als die radiale Dicke des Dichtwulstes 124. Wie nachfolgend noch zu erläutern ist, weist der Dichtring 12 jeweils axial neben dem Dichtwulst 124 Ausweichräume auf, in welche der Dichtwulst 124 beim Einschieben des Rohrendes zumindest teilweise verpresst wird. In Richtung zum freien Ende 77 des Grundkörpers 6 enthält der Dichtring 12 einen zweiten Dichtwulst 96, welcher gleichfalls dichtend an der Innenfläche des Rohrendes 5 anliegt. Der zweite Dichtwulst 96 weist in besonders zweckmäßiger Weise einen geringeren Außendurchmesser auf als der erstgenannte Dichtwulst 124. Der Außendurchmesser des erfindungsgemäß vorgesehenen zweiten Dichtwulstes 96 ist zumindest gleich, vorteilhaft um einen vorgegebenen Betrag größer als der Innendurchmesser des Rohrendes 5. Es wird somit in besonders zweckmäßiger Weise eine zweifache Abdichtung mittels des Dichtringes 12 sicher gestellt, wobei aufgrund der unterschiedlichen und / oder gestuften Vorgabe der Durchmesser der beiden Dichtwulste 96, 124 gleichwohl nur ein geringer Einschubwiderstand gegeben ist. Erfindungsgemäß liegt in Einschubrichtung der Profilring 82 vor dem Dichtwulst 96 und / oder dem Dichtwulst 124. Der Abstand des Profilrings 82 zum freien Ende 77 des Grundkörpers 6 ist kleiner als der Abstand des Dichtwulstes 96 und/oder des Dichtwulstes 124 zum freien Ende 77. Beim Einschieben des Rohrendes gelangt dessen Stirnkante zunächst zur Anlage an dem dem freien Ende 77 nächstliegenden Dichtwulst 96, wodurch in besonders zweckmäßiger Weise eine axiale Fixierung des Dichtringes 12 in der Ringnut 80 des Grundkörpers 6 erreicht ist. Beim weiteren Einschieben und insbesondere beim Erreichen des Dichtwulstes 124 wird somit ein Herausschieben des Dichtringes 12 aus der Ringnut 80 mit hoher Funktionssicherheit vermieden.

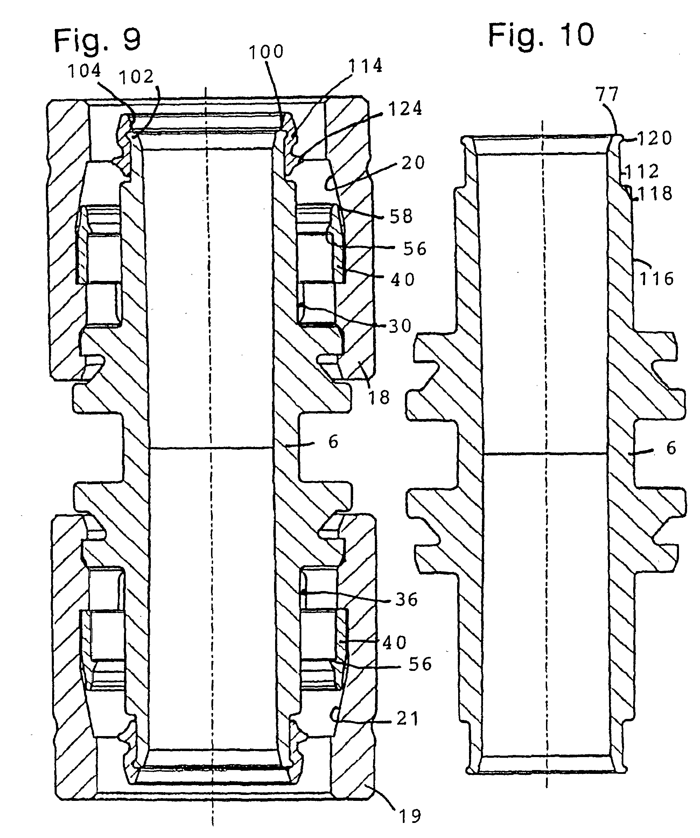

Fig. 9, 10 zeigen eine weitere Ausführungsform der Steckkupplung, welche ähnlich der Ausführungsform von Fig. 1 als Doppelmuffe ausgebildet ist und den Grundkörper 6 sowie die beiden Ringkörper oder Hauben 18 enthält. Die Klemmringe 40 sind im wesentlichen ähnlich der Ausführungsform gemäß Fig. 4 ausgebildet, allerdings ohne die erläuterten Spannelemente. Der Klemmring 40 enthält die erste innere Haltekralle 56 sowie die zweite äußere Haltekralle 58, welche der konischen Klemmfläche 20 bzw. 21 der Haube 18 bzw. 19 zugeordnet ist. Der Grundkörper 6 enthält vor dem freien Ende 77 einen im wesentlichen zylindrischen Bereich 112 oder eine Ringnut zur Aufnahme des Dichtringes 114. Der Dichtring 114 enthält ein das freie Ende 77 des Grundkörpers übergreifendes Halteelement 100. Das Halteelement 100 ist hakenförmig ausgebildet und enthält eine radial nach innen gerichtete Anlagefläche 102, welche am freien Ende 77 anliegt. Selbst bei vergleichsweise hoher Reibung wird somit das Mitziehen des Dichtringes 114 während der Montage bzw. dem Aufschieben des Rohrendes verhindert. Aufgrund der Hakengeometrie des Halteelements 100 und / oder die insbesondere vom freien Ende des Grundkörpers 6 weg gerichtete, konisch erweiterte Ausbildung der Innenfläche 104 des Dichtringes 114 ist eine strömungsgünstige Ausformung des Einlaufbereiches erreicht. Der Bereich 112 weist einen kleineren Außendurchmesser auf als der weitere zur Mitte des Muffenkörpers hin anschließende Bereich 116, wobei zwischen den genannten Bereichen eine Stufe 118 vorhanden ist. Am freien Ende 77 besitzt der Muffenkörper 6 einen radial nach außen gerichteten Profilteil 120, welcher in eine korrespondierende Ringnut 122 des Dichtringes 114 eingreift. In Kombination mit dem in die Ringnut 122 eingreifenden Profilteil 120 und dem Halteelement 100 wird eine funktionssichere axiale Fixierung des Dichtringes 114 gewährleistet. Ferner weist der Dichtring 114 den radial nach außen vorstehenden Dichtwulst bzw. eine Dichtlippe 124 auf, welche nach dem Einschieben des Rohrendes dichtend an dessen Innenfläche anliegt. Die Haube 18 enthält das wenigstens eine Sichtfenster 30, welches bevorzugt als eine radial durchgehende Öffnung ausgebildet ist. Somit kann problemlos bei der Montage überprüft werden, ob das Rohrende vollständig in die Steckkupplung eingeschoben ist. Auch nach der Montage kann jederzeit durch einfache Sichtkontrolle überprüft werden, ob das Rohrende noch vollständig und ordnungsgemäß in der Steckkupplung fixiert ist.

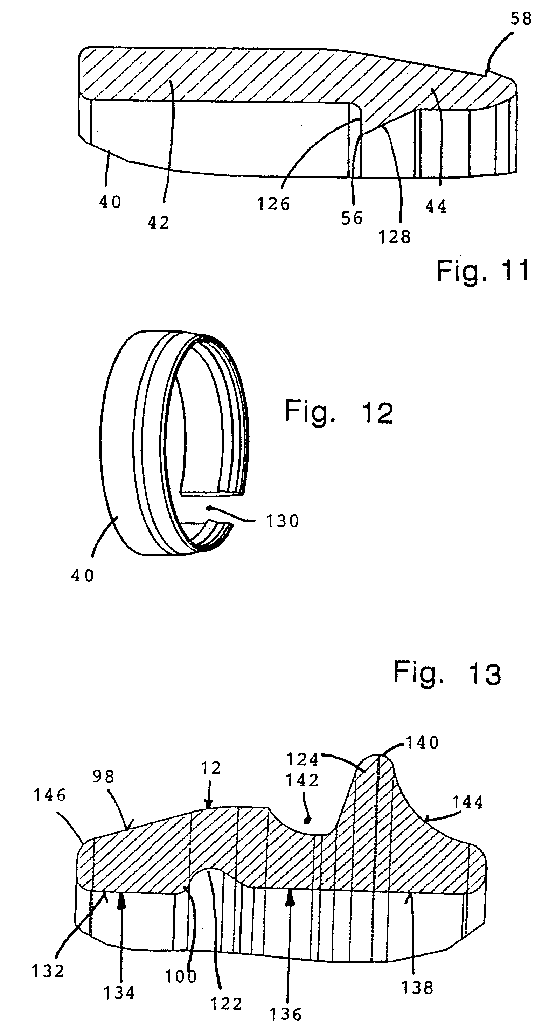

Fig. 11 zeigt teilweise und vergrößert den Klemming 40 mit der radial nach innen gerichteten ersten Haltekralle 56. Der Klemmring ist bevorzugt als gewalztes Profil, insbesondere aus Federstahl ausgebildet. Im Rahmen der Erfindung kann ferner der Klemmring 40 aus einem anderen Werkstoff, wie insbesondere aus Kunststoff, bestehen, welcher im Vergleich mit dem Werkstoff des einzuschiebenden Rohrendes eine höhere Härte und/ oder Festigkeit aufweist. Die innere Haltekralle 56 ist zumindest näherungsweise im Übergangsbereich zwischen dem ersten Teil 42 und dem zweiten Teil 44 des Klemmringes 40 vorgesehen, wobei der genannte erste Teil 42 eine im wesentlichen zylindrische Außenfläche und der zweite Teil 44 eine im wesentlichen konisch zur zweiten Haltekralle 58 sich verjüngende Außenfläche aufweist. Die Haltekralle 56 weist eine zum ersten Teil 42 gerichtete Innenfläche 126 auf, welche bevorzugt im wesentlichen in einer Radialebene liegt. Ferner besitzt die Haltekralle 56 eine dem zweiten Teil 44 zugeordnete zweite Innenfläche 128, wobei die beiden genannten Innenflächen 126, 128 einen spitzen Winkel einschließen. Somit wird in vorteilhafter Weise eine funktionssichere Fixierung des eingeschobenen Rohrendes sicher gestellt, wobei beim Einschieben das Rohrende leicht über die zweite geneigte Innenfläche 128 geschoben werden kann. Auch die Flächen der zweiten äußeren Haltekralle 58 sind derart zueinander angeordnet, daß sie einen spitzen Winkel einschließen, um ein sicheres Festkrallen in der zugeordneten Klemmfläche der Haube zu gewährleisten.

Fig. 12 zeigt in einer perspektivischen Darstellung den Klemmring 40, wobei nunmehr der axiale Spalt oder Schlitz 130 gut zu erkennen ist. Der Schlitz 130 ermöglicht die problemlose Montage des Klemmringes 40 in der Haube.

Fig. 13 zeigt teilweise und vergrößert den Dichtring 12 mit der erwähnten Ringnut 122, in welche der oben erläuterte Profilring des Grundkörpers eingreift. Das Halteelement 100 weist bei dieser besonderen Ausführungsform des Dichtringes 12 eine im wesentlichen zylindrische innenfläche 132 auf. Der Durchmesser 134 der Innenfläche 132 ist in bevorzugter Weise um einen vorgegebenen Faktor kleiner als der Durchmesser 136 der übrigen Innenfläche 138 des Dichtringes. Der Dichtwulst bzw. die Dichtlippe 124 weist einen im Prinzip dreieckartigen Querschnitt auf, wobei die radial außenliegende Spitze 140 abgerundet ausgebildet ist. Neben dem Dichtwulst 124 ist ein Ausweichraum 142 vorgesehen, in dessen Bereich der Dichtring eine reduzierte Wandstärke besitzt. Auf der anderen Seite ist die Außenfläche 144 der Dichtlippe 124 in vorteilhafter Weise konkav ausgebildet. Somit kann die Dichtlippe 124 beim Einschieben des Rohrendes problemlos ausweichen, so daß der Einschubwiderstand gering ist. Zum vorderen Ende 146 des Dichtringes ist die Außenfläche 98 verjüngt, insbesondere konisch verjüngt ausgebildet, so daß das Rohrende problemlos in den Steckverbinder eingeschoben werden kann und hierbei zentriert wird.

### Bezugszeichen

- 2: Mittelebene
- 4, 5: Rohrende
- 6: Grundkörper
- 8: innerer Endbereich von 6
- 10, 11: Innenfläche von 4, 5
- 12: Dichtring
- 14: erster Steg
- 16,: Längsachse
- 18: Ringkörper / Haube
- 20: Klemmfläche
- 22: freies Ende von 18
- 24: Verbindungselement
- 26: Ringnut in 24
- 27: Ringspalt
- 28: Rand von 18
- 30: Sichtfenster
- 32: zweiter Steg
- 34: radialer Ansatz
- 35: Ringraum
- 36: Ringnut in 6
- 38: Bereich bei 22
- 40: Klemmring
- 42: erster Teil von 40
- 44: zweiter Teil von 40
- 46: Innenfläche von 18
- 48: Ringbund von 18
- 52: erster Öffnungswinkel von 44
- 54: zweiter Öffnungswinkel
- 56: erste innere Haltekralle von 40
- 58: zweite äußere Haltekralle von 40
- 60: freies Ende von 6
- 62: Nocken
- 63: Stufe / Ringbund in 19
- 64: Spannelement
- 65: Pfeil
- 66: Steg
- 68: Stirnfläche zu 40
- 70: Abstand
- 72: axialer Bereich
- 74: Innenbereich
- 76: axialer Abstand
- 77: freies Ende von 6
- 78: Außenfläche von 14
- 80: Ringnut
- 82: Profilring
- 84: Boden von 80
- 86: Ring
- 88: Außenfläche von 86
- 90: Erstreckung
- 92: axiale Länge von 12
- 94: radiale Dicke von 12 / 124
- 96: zweiter Dichtwulst
- 98: Außenfläche
- 100: Halteelemte
- 102: Anlagefläche
- 104: Innenfläche von 100
- 112: zylindrischer Bereich von 6
- 114: Dichtring
- 116: weiterer Bereich von 6
- 118: Stufe
- 120: Profilteil
- 122: Ringnut
- 124: Dichtwulst / Dichtlippe
- 126, 128: Innenfläche von 56
- 130: Spalt / Schlitz
- 132: Innenfläche von 100
- 134: Innendurchmesser von 100
- 136: Innendurchmesser von 138
- 138: übrige Innenfläche
- 140: Spitze von 124
- 142: Ausweichraum
- 144: Außenfläche
- 146: vorderes Ende von 12

## Patentansprüche

1. Steckkupplung, enthaltend einen Grundkörper (6), einen Dichtring (12), einen Klemmring (40), sowie einen mit dem Grundkörper (6) verbindbaren Ringkörper (18), wobei in einen axialen Ringspalt (27) zwischen dem Grundkörper (6) und dem Ringkörper (18) ein Rohrende (4, 5) einschiebbar und mittels des in dem Ringspalt (27) angeordneten Klemmringes (40) festspannbar ist, wobei der Dichtring (12) an der Innenfläche (10, 11) des eingeschobenen Rohrendes (4, 5) dichtend anliegt und der Klemmring (40) an der Außenfläche des eingeschobenen Rohrendes (4, 5) unter Vorspannung anliegt,
**dadurch gekennzeichnet, dass** der Ringkörper (18) in dem Bereich, in welchem sich das vollständig eingeschobene Rohrende (4, 5) mit seiner Stirnfläche befindet, wenigstens ein Sichtfenster (30) enthält, wobei der genannte Bereich mit dem Sichtfenster (30) axial zwischen dem Dichtring (12) und einem ersten radial nach außen gerichteten Steg (14) des Grundkörpers (6) angeordnet ist, an welchem Steg (14) das Rohrende (4, 5) zur Anlage bringbar ist, und dass der Dichtring (12) als Flachdichtung mit einem ersten und einem zweiten Dichtwulst (124, 96) ausgebildet ist, welche an der Innenfläche (10, 11) des eingeschobenen Rohrendes (4, 5) dichtend anliegen, wobei die axiale Länge (92) des Dichtringes (12) um einen vorgegebenen Faktor größer ist als die radiale Dicke des ersten Dichtwulstes (124).

2. Steckkupplung nach Anspruch 1, **dadurch gekennzeichnet, dass** mit dem ersten radial nach außen gerichteten Steg (14) des Grundkörpers (6) ein Verbindungselement (24, 25) des Ringkörpers (18, 19) in Eingriff steht und / oder dass der Ringkörper (18) axial über die Stirnfläche des Rohrendes (4, 5) insbesondere mit dem Verbindungselement (24), hinausragt.

3. Steckkupplung nach Anspruch 1 oder 2, **dadurch gekennzeichnet, dass** der Klemmring (40) eine erste innere Haltekralle (56), welche in die Außenfläche des Rohrendes (4, 5) einpreßbar ist, und / oder eine zweite äußere Haltekralle (58) aufweist, welche mit einer bevorzugt konischen Klemmfläche (2) des Ringkörpers (18) in Eingriff steht.

4. Steckkupplung nach einem der Ansprüche 1 bis 3, **dadurch gekennzeichnet, dass** der Klemmring (40) einen ersten im wesentlichen zylindrischen Teil (42) und einen zweiten zum Endbereich (8, 9) des Grundkörpers (6) sich verjüngenden Teil (44) enthält, wobei die Außenfläche des genannten zweiten Teils (44) an der Klemmfläche (20, 21) unter Vorspannung anliegt.

5. Steckkupplung nach einem der Ansprüche 1 bis 4, **dadurch gekennzeichnet, dass** eine Außenfläche und eine Innenfläche des Klemmringes (40), bevorzugt dessen zweiten Teiles (44), in einem vorgegebenen Öffnungswinkel (52) angeordnet sind und / oder dass der genannte erste Öffnungswinkel (52) größer ist als ein zweiter Öffnungswinkel (54) zwischen der Klemmfläche (20) des Ringkörpers (18) und der Außenfläche des Rohrendes (4, 5).

6. Steckkupplung nach einem der Ansprüche 3 bis 5, **dadurch gekennzeichnet, dass** Flächen (126, 128) der inneren Haltekralle (56) und der äußeren Haltekralle (58) einen spitzen Winkel einschließen und / oder dass die innere Haltekralle (56) im Bereich der im wesentlichen zylindrischen Innenfläche des Klemmringes (40) angeordnet ist und / oder dass die äußere Haltekralle (58) am vorderen Ende des Klemmringes (40) im Bereich einer sich bevorzugt konisch verjüngenden Außenfläche angeordnet ist.

7. Steckkupplung nach einem der Ansprüche 1 bis 6, **dadurch gekennzeichnet, dass** das Sichtfenster (30) als eine Öffnung (36) oder als ein transparenter Bereich ausgebildet ist und/oder dass das Sichtfenster (30) axial vor dem ersten Steg (14) angeordnet ist und / oder dass das Sichtfenster (30) außerhalb des mittels des Dichtringes (12) abgedichteten Innenbereiches der Steckkupplung vorgesehen ist.

8. Steckkupplung nach einem der Ansprüche 1 bis 7, **dadurch gekennzeichnet, dass** der Grundkörper (6) wenigstens einen Profilring (82) und der Dichtring (12) wenigstens eine Ringnut (122) aufweisen, welche miteinander korrespondieren und in Eingriff sind.

9. Steckkupplung nach einem der Ansprüche 1 bis 8, **dadurch gekennzeichnet, dass** der Dichtring (12) ein bevorzugt ringförmiges Halteelement (100) mit einer Stützfläche aufweist, welche zur Längsachse (16) in einem vorgegebenen Winkel geneigt angeordnet ist, und /oder dass das bevorzugt hakenförmig ausgebildete Halteelement (100) das freie Ende (77) des Grundkörpers (6) übergreift und / oder dass das Halteelement (100) eine näherungsweise konisch geneigte Innenfläche aufweist und / oder dass das Halteelement (100) mit einer Anlagefläche (102) am freien Ende (77) des Grundkörpers (6) anliegt.

10. Steckkupplung nach einem der Ansprüche 1 bis 9, **dadurch gekennzeichnet, dass** der Dichtring (12) eine zur Längsachse (16) geneigte Außenfläche (98) aufweist und / oder dass neben der Dichtlippe (124) wenigstens ein Ausweichraum (142) vorgesehen ist.

## Claims

1. Plug-type coupling, containing a basic element (6), a ring seal (12), a locking ring (40) and an annular body (18) which can be connected to the basic element (6), wherein a pipe end (4, 5) can be inserted into an axial annular gap (27) between the basic element (6) and the annular body (18) and can be fixed by means of the locking ring (40) arranged in the annular gap (27), the ring seal (12) resting in a sealing manner on the inner face (10, 11) of the inserted pipe end (4, 5) and the locking ring (40) resting on the outer face of the inserted pipe end (4, 5) with pre-stressing, **characterised in that** in the region in which the completely inserted pipe end (4, 5) is located with its end face, the annular body (18) contains at least one viewing window (30), said region with the viewing window (30) being arranged axially between the ring seal (12) and a first radially outwardly directed web (14) of the basic element (6), with which web (14) the pipe end (4, 5) can be brought into contact, and **in that** the ring seal (12) is constructed as a flat seal with a first and a second sealing bead (124, 96) which rests in a sealing manner on the inner face (10, 11) of the inserted pipe end (4, 5), the axial length (92) of the ring seal (12) being greater by a predetermined factor than the radial thickness of the first sealing bead (124).

2. Plug-type coupling according to claim 1, **characterised in that** a connecting element (24, 25) of the annular body (18, 19) is engaged with the first radially outwardly directed web (14) of the basic element (6) and/or **in that** the annular body (18) projects axially beyond the end face of the pipe end (4, 5), in particular with the connecting element (24).

3. Plug-type coupling according to either claim 1 or claim 2, **characterised in that** the locking ring (40) comprises a first inner holding claw (56) which can be pressed into the outer face of the pipe end (4, 5) and/or a second outer holding claw (58) which is engaged with a preferably conical fixing face (2) of the annular body (18).

4. Plug-type coupling according to any one of claims 1 to 3, **characterised in that** the locking ring (40) contains a first substantially cylindrical part (42) and a second part (44) tapering toward the end region (8, 9) of the basic element (6), the outer face of said second part (44) resting with bias on the fixing face (20, 21).

5. Plug-type coupling according to any one of claims 1 to 4. **characterised in that** an outer face and an inner face of the locking ring (40), preferably that of the second part (44), is arranged at a predetermined angle (52) of opening and/or **in that** the said first opening angle (52) is greater than a second opening angle (54) between the fixing face (20) of the annular body (18) and the outer face of the pipe end (4, 5).

6. Plug-type coupling according to any one of claims 3 to 5, **characterised in that** faces (126, 128) of the inner holding claw (56) and the outer holding claw (58) enclose an acute angle and/or **in that** the inner holding claw (56) is arranged in the region of the substantially cylindrical inner face of the locking ring (40) and/or **in that** the outer holding claw (58) is arranged on the leading end of the locking ring (40) in the region of a preferably conically tapering outer face.

7. Plug-type coupling according to any one of claims 1 to 6, **characterised in that** the viewing window (30) is constructed as an opening (36) or as a transparent region and/or **in that** the view window (30) is arranged axially upstream of the first web (14) and/or **in that** the viewing window (30) is provided outside of the inner region of the plug-type coupling sealed by means of the ring seal (12).

8. Plug-type coupling according to any one of claims 1 to 7, **characterised in that** the basic element (6) comprises at least one profile ring (82) and the ring seal (12) comprises at least one annular groove (122) which correspond and engage with each other.

9. Plug-type coupling according to any one of claims 1 to 8, **characterised in that** the ring seal (12) comprises a preferably annular retaining element (100) with a support face which is arranged at an incline to the longitudinal axis (16) at a predetermined angle and/or **in that** the preferably hook-shaped retaining element (100) overlaps the free end (77) of the basic element (6) and/or **in that** the retaining element (100) comprises an approximately conically inclined inner face and/or **in that** the retaining element (100) rests with an abutment face (102) on the free end (77) of the basic element (6).

10. Plug-type coupling according to any one of claims 1 to 9, **characterised in that** the ring seal (12) comprises an outer face (98) inclined with respect to the longitudinal axis (16) and/or **in that**, in addition to the sealing lip (124), at least one expansion space (142) is provided.

## Revendications

1. Raccord à emmancher, comprenant un corps de base (6), une bague d'étanchéité (12), une bague de serrage (40), ainsi qu'un corps annulaire (18) pouvant être relié au corps de base (6), une extrémité (4, 5) de tube pouvant être introduite dans une fente annulaire axiale (27) entre le corps de base (6) et le corps annulaire (18) et pouvant être immobilisée au moyen de la bague de serrage (40) placée dans la fente annulaire (27), dans lequel la bague d'étanchéité (12) s'appuie de manière étanche contre la surface intérieure (10, 11) de l'extrémité (4, 5) de tube enfoncée et la bague de serrage (40) s'appuie sous précontrainte contre la surface extérieure de l'extrémité (4, 5) de tube enfoncée, ***caractérisé en ce que,*** dans la zone dans laquelle l'extrémité (4, 5) de tube complètement enfoncée se trouve avec sa surface annulaire, le corps annulaire (18) comprend au moins une fenêtre d'inspection (30), ladite zone avec la fenêtre d'inspection (30) étant située axialement entre la bague d'étanchéité (12) et un premier talon (14) du corps de base (6) orienté radialement vers l'extérieur, talon (14) contre lequel l'extrémité (4, 5) de tube peut être mise en appui, et ***en ce que*** la bague d'étanchéité (12) est réalisée en joint plat avec un premier et un deuxième bourrelets d'étanchéité (124, 96) qui s'appuient hermétiquement contre la surface intérieure (10, 11) de l'extrémité de tube (4, 5) enfoncée, la longueur axiale (92) de la bague d'étanchéité (12) étant supérieure d'un facteur prédéterminé à l'épaisseur radiale du premier bourrelet d'étanchéité (124).

2. Raccord à emmancher selon la revendication 1, ***caractérisé en ce qu'***un élément de liaison (24, 25) du corps annulaire (18, 19) est en prise avec le premier talon (14) du corps de base (6) orienté radialement vers l'extérieur et/ou ***en ce que*** le corps annulaire (18) dépasse axialement de la surface frontale de l'extrémité (4, 5) de tube, en particulier avec l'élément de liaison (24).

3. Raccord à emmancher selon la revendication 1 ou 2, ***caractérisé en ce que*** la bague de serrage (40) présente un premier crampon de maintien intérieur (56) qui peut être pressé dans la surface extérieure de l'extrémité (4, 5) de tube, et/ou un deuxième crampon de maintien extérieur (58) qui est en prise avec une surface de serrage (2) de préférence conique du corps annulaire (18).

4. Raccord à emmancher selon l'une quelconque des revendications 1 à 3, ***caractérisé en ce que*** la bague de serrage (40) comprend une première partie (42) essentiellement cylindrique et une deuxième partie (44) s'effilant en direction de la zone d'extrémité (8, 9) du corps de base (6), la surface extérieure de ladite deuxième partie (44) s'appuyant sous précontrainte contre la surface de serrage (20, 21).

5. Raccord à emmancher selon l'une quelconque des revendications 1 à 4, ***caractérisé en ce qu'***une surface extérieure et une surface intérieure de la bague de serrage (40), de préférence sa deuxième partie (44), sont placées dans un angle d'ouverture prédéterminé (52) et/ou ***en ce que*** ledit premier angle d'ouverture (52) est plus grand qu'un deuxième angle d'ouverture (54) entre la surface de blocage (20) du corps annulaire (18) et la surface extérieure de l'extrémité (4, 5) de tube.

6. Raccord à emmancher selon l'une quelconque des revendications 3 à 5, ***caractérisé en ce* *que*** des surfaces (126, 128) du crampon de maintien intérieur (56) et du crampon de maintien extérieur (58) délimitent un angle aigu et/ou ***en ce que*** le crampon de maintien intérieur (56) est placé au niveau de la surface intérieure essentiellement cylindrique de la bague de serrage (40) et/ou ***en ce que*** le crampon de maintien extérieur (58) est placé à l'extrémité avant de la bague de serrage (40) au niveau d'une surface extérieure s'effilant de préférence de manière conique.

7. Raccord à emmancher selon l'une quelconque des revendications 1 à 6, ***caractérisé en ce que*** la fenêtre d'inspection (30) est conformée en ouverture (36) ou en zone transparente et/ou ***en ce que*** la fenêtre d'inspection (30) est placée axialement avant le premier talon (14) et/ou ***en ce que*** la fenêtre d'inspection (30) est prévue à l'extérieur de la partie intérieure du raccord à emmancher rendue hermétique par la bague d'étanchéité (12).

8. Raccord à emmancher selon l'une quelconque des revendications 1 à 7, ***caractérisé en ce que*** le corps de base (6) présente au moins une bague profilée (82) et la bague d'étanchéité (12) au moins une rainure annulaire (122), lesquelles se correspondent et sont en prise mutuelle.

9. Raccord à emmancher selon l'une quelconque des revendications 1 à 8, ***caractérisé en ce que*** la bague d'étanchéité (12) présente un élément de maintien (100) de préférence annulaire avec une surface de soutien qui est inclinée d'un angle prédéterminé par rapport à l'axe longitudinal (16), et/ou ***en ce que*** l'élément de maintien (100) réalisé de préférence en crochet saisit l'extrémité libre (77) du corps de base (6) par le dessus, et/ou ***en ce que*** l'élément de maintien (100) présente une surface intérieure inclinée approximativement de manière conique, et/ou ***en ce que*** l'élément de maintien (100) s'appuie avec une surface d'appui (102) contre une extrémité libre (77) du corps de base (6).

10. Raccord à emmancher selon l'une quelconque des revendications 1 à 9, ***caractérisé en ce que*** la bague d'étanchéité (12) présente une surface extérieure (98) inclinée par rapport à l'axe longitudinal (16) et/ou ***en ce qu'*** au moins une chambre d'échappement (142) est prévue à côté de la lèvre d'étanchéité (124).
